# FASCICULE DE BREVET EUROPEEN

(11) **EP 4 405 577 B1**
(45) Date de publication et mention de la délivrance du brevet: **18.06.2025**
(21) Numéro de dépôt: 22773230.2
(22) Date de dépôt: 06.09.2022
(51) Int. Cl.: F02C 1/05, F25B 30/04, F25B 1/053, F25B 27/02

(54) **PROCÉDÉ DE COGÉNÉRATION EN CYCLE OUVERT**
COGENERATIONSPROZESS MIT OFFENEM KREISLAUF
OPEN-CYCLE COGENERATION PROCESS

(30) Priorité: 23.09.2021 FR 2110005
(43) Date de publication de la demande: 31.07.2024
(73) Titulaire: Eclair Conseil, 69680 Chassieu (FR)
(72) Inventeur: DUVOISIN, Etienne, 69680 CHASSIEU (FR)
(74) Mandataire: Bouvier, Thibault
(86) Numéro de dépôt international: PCT/EP2022/074689
(87) Numéro de publication internationale: WO 2023/046459

(56) Documents cités:
- WO-A1-2007/096656
- CN-U- 204 082 237

## Description

La présente invention concerne le domaine la cogénération d'énergie.

Dans ce domaine, il est courant de combiner la production d'énergie électrique et la production d'énergie thermique grâce à des systèmes comprenant une turbine, une source de chaleur créant des fumées et un échangeur entre les fumées et la turbine, par exemple une chaudière.

Il existe diverses solutions de cogénération, toutes basées sur ce principe.

Les valeurs de température et d'énergie varient en fonction des besoins et des systèmes, toutefois, les systèmes en cycle ouvert connus présentent en général un rendement global inférieur à 80%, ce qui n'est pas satisfaisant.

Par exemple, il est connu le document D1 (CN 204082237) qui propose une solution qui nécessite au moins un compresseur.

La présente invention vise à résoudre ce problème en proposant une solution qui, grâce à une disposition astucieuse d'échangeurs et éventuellement d'autres moyens de récupération d'énergie, décrits ultérieurement, d'atteindre un rendement d'environ 98%.

### RESUME DE L'INVENTION

Plus précisément, l'invention concerne un système de cogénération en cycle ouvert d'énergie thermique et électrique, comprenant :
- un ensemble d'au moins un échangeur thermique, configuré pour être relié à des fumées de combustion provenant d'un foyer ; ledit ensemble d'au moins un échangeur thermique comprenant une entrée et une sortie d'air de traitement,
- une turbine, configurée pour produire de l'énergie électrique, reliée à la sortie d'air de traitement dudit ensemble d'au moins un échangeur thermique,
- une ligne de sortie de l'air de traitement, reliant la sortie de la turbine à l'extérieur,
- une ligne de sortie fumées de combustion, pour évacuer les fumées de combustion vers l'extérieur,
- un ensemble d'au moins un compresseur, configuré pour comprimer l'air de traitement en entrée de l'ensemble d'au moins un échangeur thermique.

Il est essentiellement caractérisé en ce qu'il comprend en outre,
- une pompe à chaleur à absorption, comprenant :
   * un circuit de fluide chaud,
   * un circuit de fluide froid,
   * un circuit de fluide tiède, ou réseau utile, et
   * un ensemble d'au moins un échangeur pour échanger de la chaleur entre l'un au moins des circuits de la pompe à chaleur et l'une au moins parmi la ligne de sortie de l'air de traitement et la ligne de sortie fumées de combustion.

On peut prévoir en outre un ensemble d'au moins un dispositif thermoélectrique, permettant de produire de l'électricité à partir d'une source de chaleur de plus de 150°C et disposé sur l'une au moins parmi la ligne de sortie de l'air de traitement et la ligne de sortie fumées de combustion.

On peut prévoir que le dispositif thermoélectrique est au moins l'un parmi :
- une machine à cycle organique de Rankine ;
- un expanseur, notamment un expanseur à vis ;
- une turbine vapeur.

On peut prévoir que le système comprend en outre un ensemble d'au moins un échangeur pour échanger de la chaleur entre au moins l'un parmi :
- le circuit de fluide chaud et la ligne de sortie de l'air de traitement,
- le circuit de fluide chaud et la ligne de sortie fumées de combustion,
- le circuit de fluide tiède et la ligne de sortie de l'air de traitement,
- le circuit de fluide tiède et la ligne de sortie fumées de combustion,
- le circuit de fluide froid et la ligne de sortie de l'air de traitement, et
- le circuit de fluide froid et la ligne de sortie fumées de combustion.

On peut prévoir en outre une enceinte, configurée pour produire de l'énergie thermique et des fumées de combustion, et comprenant ledit foyer et une sortie de fumées de combustion ; ledit ensemble d'au moins un échangeur thermique pouvant être interne ou externe à l'enceinte

On peut prévoir que l'enceinte est l'un parmi :
- une chaudière,
- un four industriel,
- un incinérateur.

On peut prévoir le foyer comprend de l'air comburant, ledit air comburant étant de l'air extérieur qui est traité dans un circuit pour l'air comburant, ledit circuit pour l'air comburant comprenant au moins l'un parmi :
- un ensemble d'au moins un échangeur pour échanger de la chaleur avec la ligne de sortie de l'air de traitement, et
- un ensemble d'au moins un échangeur pour échanger de la chaleur avec la ligne de sortie fumées de combustion.

On peut prévoir un échangeur de chaleur, disposé en amont de l'enceinte, et configuré pour préchauffer l'air de traitement en entrée de l'enceinte ou en entrée de l'ensemble d'au moins un échangeur thermique relié aux fumées de combustion provenant du foyer, et avec la chaleur de l'air de traitement en sortie de la turbine.

On peut prévoir que le réseau utile présente, en entrée de la pompe à chaleur à absorption, une température comprise entre 35°C et 65°C, et en sortie de la pompe à chaleur à absorption, une température comprise entre 40°C et 90°C.

On peut prévoir que le réseau utile est un réseau de chaleur urbain, ou un réseau de procédé industriel valorisant de la chaleur. Ou encore tout autre réseau de procédé thermique valorisant de la chaleur.

On peut prévoir que le dispositif thermoélectrique est équipé d'un échangeur interne, configuré pour échanger de l'énergie thermique avec le réseau utile.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

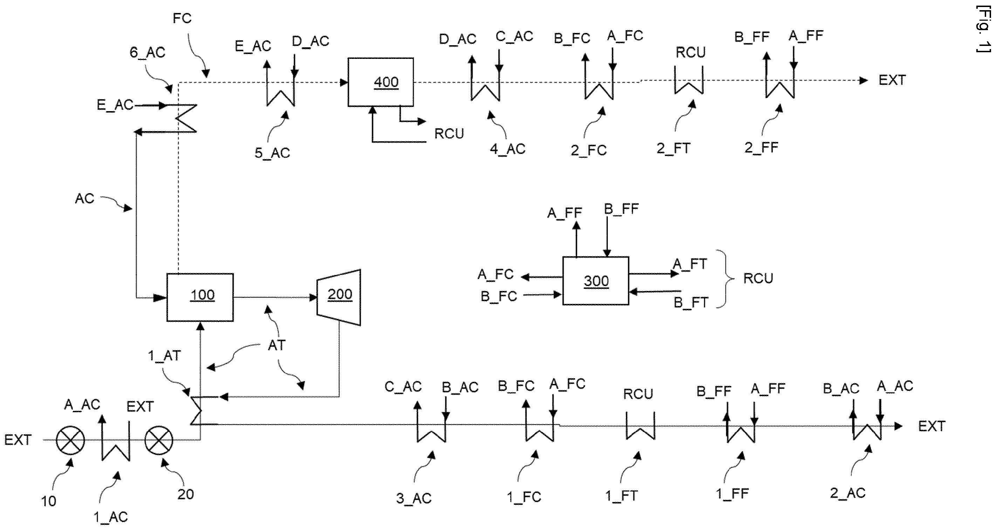

[Fig. 1] illustre un schéma d'un mode de réalisation du système selon l'invention.

### DESCRIPTION DETAILLEE

La solution selon l'invention comprend un ensemble de moyens, décrits ci-après, qui comprennent notamment :
- un circuit pour de l'air de traitement AT,
- un circuit pour de l'air comburant _AC, pour le foyer de l'enceinte décrite ultérieurement,
- un circuit pour des fumées de combustion FC, de ladite enceinte.

Par concision, on entend indistinctement « l'enceinte » et « le foyer de l'enceinte ».

L'invention utilise astucieusement l'énergie d'au moins un circuit parmi : le circuit de l'air de traitement, le circuit de l'air comburant et le circuit des fumées de combustion, grâce à un ensemble d'échangeurs thermiques.

Par concision, les échangeurs thermiques sont dénommés « échangeurs ».

De même, par concision on entend par « un échangeur » ou par « l'échangeur » un ensemble d'au moins un échangeur. Également, le « premier », « deuxième », « troisième », etc. échangeur est à comprendre par un premier ensemble d'au moins un échangeur, un deuxième ensemble d'au moins un échangeur, un troisième ensemble d'au moins un échangeur, etc.

Chaque circuit est distinct, de sorte que l'air de traitement passe par un ensemble de canalisations distinctes de l'ensemble de canalisations par lesquelles passe l'air comburant de l'enceinte, et distinctes de l'ensemble de canalisations par lesquelles passent les fumées de combustion.

Par concision, aucune canalisation n'est décrite ici.

Les valeurs numériques présentées ici sont issues d'une simulation. Elles sont cohérentes entre elles, illustratives, mais non limitatives. Ces valeurs sont données avec un écart de plus ou moins 10%.

### * Circuit de l'air de traitement *

L'air de traitement est issu de toute source d'air, en l'espèce l'air extérieur EXT, ambiant, qui est traité comme décrit ci-dessous.

La présente invention se base sur un système de cogénération comprenant un cycle dit « cycle air chaud ».

Le cycle air chaud comprend une enceinte et une turbine, un réseau de canalisations d'air de traitement, un réseau de canalisations d'air comburant de l'enceinte, un réseau de canalisation des fumées de combustion de l'enceinte ainsi qu'un ensemble d'échangeurs décrits ultérieurement.

Dans le cycle air chaud, l'air de traitement est prélevé à l'extérieur et amené en entrée de l'enceinte à travers au moins un étage de compression, et en l'espèce de deux étages de compression.

On prévoit un premier étage de compression, comprenant un premier compresseur 10, dans lequel de l'air de traitement est prélevé à l'extérieur et comprimé grâce au premier compresseur.

Par exemple, l'air extérieur est à une température de 10°C. Il est comprimé à une valeur seuil prédéterminée, en l'espèce 4,2 Bars. De préférence, la valeur seuil est supérieure ou égale à 3 Bars. En sortie du premier compresseur, l'air de traitement est à 183 °C.

On peut prévoit ensuite un deuxième étage de compression, comprenant un deuxième compresseur 20, pour comprimer l'air de traitement en aval du premier compresseur. L'air de traitement est ainsi maintenu à 183 °C et à la pression seuil, en l'espèce 4,2 Bars.

Entre le premier compresseur et le deuxième compresseur, avantageusement montés en série, on peut disposer au moins un premier échangeur pour l'air comburant 1_AC, décrit ultérieurement.

L'ensemble des éléments décrits ci-avant : premier et deuxième compresseur, brides pour l'échangeur de chaleur, etc. peut être compris dans un module sous forme de caisson unitaire. On peut même prévoir qu'ils sont intégrés dans un caisson unitaire avec la turbine à air chaud qui entraine les compresseurs directement depuis son arbre mécanique.

### - Enceinte -

L'enceinte 100 est par exemple une chaudière, en l'espèce une chaudière biomasse, et plus particulièrement une chaudière à bois. De préférence, l'enceinte comprend un échangeur de chaleur externe (non illustré).

L'air de traitement comprimé par les compresseurs est ensuite chauffé par l'enceinte, en l'espèce à 703 °C, avec une température de fumées de 900°C dans l'enceinte. La puissance d'entrée réelle de l'enceinte est de 2579 kW et la puissance échangée par l'enceinte est de 1438 kW.

L'air de traitement chauffé par l'enceinte est ensuite détendu, en l'espèce dans une turbine 200 à air chaud. L'air de traitement est donc amené directement de la sortie de l'enceinte à l'entrée de la turbine.

On peut aussi prévoir que l'enceinte est un four industriel ou un incinérateur. Dans ce cas, on peut prévoir de brancher directement un échangeur thermique sur les fumées de chaleur fatale du four industriel ou de l'incinérateur. De préférence, les fumées de chaleur fatale sont à plus de 600°C. Dans ce cas, un ensemble d'au moins un échangeur entre les fumées de chaleur fatale et l'air de traitement convient.

Grâce à la turbine, on peut récupérer de l'énergie électrique, en l'espèce 1150 kW en puissance réelle. Dans le cas où la turbine et le(s) compresseur(s) sont intégrés dans un module unique, on récupère 330 kWe net à cause de de la force motrice pour entrainer le compresseur.

En sortie de la turbine, l'air détendu présente une température de 494°C et une pression de 1,05 Bar.

Cette chaleur peut être avantageusement utilisée pour préchauffer l'air de traitement comprimé en entrée de l'enceinte ou de l'ensemble d'au moins un échangeur thermique, grâce à un premier échangeur de chaleur pour l'air de traitement 1_AT disposé entre la sortie du deuxième compresseur et l'entrée de l'enceinte ou de l'ensemble d'au moins un échangeur thermique. Le premier échangeur de chaleur pour l'air de traitement 1_AT permet d'augmenter la température de l'air de traitement de 183°C à 448°C en entrée de l'enceinte, et de baisser la température de l'air de traitement en sortie de la turbine de 495°C à 235°C, équivalent à une puissance échangée de 1347 kW.

Grâce au préchauffage de l'air de traitement, l'enceinte est plus efficace et consomme moins d'énergie biomasse.

En sortie du cycle air chaud, c'est-à-dire en sortie du premier échangeur de chaleur pour l'air de traitement 1_AT, la température de l'air de traitement détendu est à 235 °C.

Cette chaleur peut ensuite avantageusement être utilisée par un ensemble d'échangeurs de chaleur disposés le long d'une ligne de sortie de l'air de traitement, qui relie la sortie de la turbine à l'extérieur.

L'ensemble d'échangeurs de chaleur disposés le long de la ligne de l'air de traitement peut en effet être utilisé pour échanger de l'énergie thermique avec l'au moins l'un parmi :
- l'air comburant en entrée de l'enceinte,
- le fluide caloporteur d'un circuit de fluide chaud décrit ultérieurement,
- le fluide caloporteur d'un circuit de fluide froid décrit ultérieurement,
- le fluide caloporteur d'un circuit de fluide tiède, ou réseau utile, décrit ultérieurement, et
- le fluide caloporteur interne d'un dispositif thermoélectrique, décrit ultérieurement.

L'ensemble de ces échangeurs sont décrits ultérieurement.

A l'issue de la ligne de sortie de l'air de traitement, l'air de traitement est à 25°C et peut être relâché dans l'atmosphère.

### * Circuit des fumées de combustion *

Les fumées de combustion en sortie de l'enceinte présentent une température élevée, en l'espèce de 645 °C.

Cette chaleur est avantageusement utilisée par un ensemble d'échangeurs disposés le long d'une ligne de sortie des fumées de combustion, qui relie la sortie de l'enceinte à l'extérieur, et qui sont décrits ultérieurement.

L'ensemble d'échangeurs de chaleur disposés le long de la ligne de sortie des fumées de combustion peut être utilisé pour échanger de l'énergie thermique avec au moins l'un parmi :
- l'air comburant en entrée de l'enceinte,
- l'air de traitement en entrée de l'enceinte,
- le fluide caloporteur du circuit de fluide chaud décrit ultérieurement,
- le fluide caloporteur du circuit de fluide froid décrit ultérieurement,
- le fluide caloporteur du réseau utile décrit ultérieurement,
- le fluide caloporteur interne d'un dispositif thermoélectrique, décrit ultérieurement.

### * Pompe à chaleur *

On prévoit une pompe à chaleur 300.

En l'espèce on prévoit une pompe à chaleur à absorption 300, ou PACA, connue en soi.

La PACA comprend :
- un circuit de fluide chaud, en l'espèce une eau surchauffée ;
- un circuit de fluide froid, en l'espèce une eau froide, et
- un circuit de fluide à moyenne température, ou réseau utile, en l'espèce une eau tiède.

Le fluide est caloporteur, par exemple de l'eau. L'eau froide est une eau de refroidissement. Les notions de « froid », « tiède » et « chaud » sont relatives. Elles signifient que la température de l'eau froide est inférieure la température de l'eau tiède, elle-même inférieure à la température de l'eau chaude.

Les valeurs de température en entrée et en sortie de la PACA pour chaque circuit de fluide sont des valeurs de consignes prédéterminées. Elles peuvent différer des valeurs de simulation données ici.

Les 3 circuits de fluides ci-dessus sont configurés pour récupérer de la chaleur, grâce à des échangeurs, sur au moins une ligne parmi :
- la ligne de sortie de l'air de traitement,
- la ligne de sortie des fumées de combustion, et
- le circuit de l'air comburant.

Avantageusement, on met en œuvre une double récupération de chaleur, en l'espèce sur la ligne de sortie de l'air de traitement et sur la ligne de sortie des fumées de combustion, ce qui augmente l'efficacité du procédé ; et ce qui permet d'abaisser la température des fumées de combustion jusqu'à une valeur de 42°C en bout de ligne de sortie des fumées de combustion, et d'abaisser la température de l'air de traitement jusqu'à une valeur de 32°C en bout de ligne de sortie de l'air de traitement, c'est-à-dire des températures quasi ambiantes.

Par construction d'une PACA, la température du circuit de fluide tiède, en entrée et en sortie de la PACA, est fonction de la température du circuit de fluide chaud, en entrée et en sortie de la PACA et de la température du circuit de fluide froid, en entrée et en sortie de la PACA.

En l'espèce :
- pour le circuit de fluide chaud, la température du fluide caloporteur en entrée de la PACA est de 170°C, et la température en sortie de la PACA est de 95°C ;
- pour le circuit de fluide froid, la température du fluide caloporteur en entrée de la PACA est de 35°C, et la température en sortie de la PACA est de 28°C ;
- pour le circuit de fluide tiède, la température du fluide caloporteur en entrée de la PACA est de 60°C, et la température en sortie de la PACA est de 80°C.

### - Circuit de fluide chaud -

En l'espèce, le fluide caloporteur du circuit de fluide chaud est de l'eau surchauffée, à une pression de 12 Bars pour éviter à celle-ci de se transformer en vapeur. Toutefois, on peut également remplacer l'eau surchauffée par de la vapeur d'eau. Dans ce cas, la température du fluide caloporteur en entrée de la PACA peut être 150°C.

On peut prévoir de disposer un premier échangeur du circuit de fluide chaud 1_FC, en l'espèce d'eau surchauffée, sur la ligne de sortie de l'air de traitement, plus particulièrement en aval du troisième échangeur pour l'air comburant décrit ultérieurement.

Grâce au troisième échangeur pour l'air comburant, l'air comburant passe d'une température de 30°C à une température de 195°C, et l'air de traitement passe d'une température de 235°C à une température de 178°C, équivalent à une puissance échangée de 275 kW.

Grâce au premier échangeur du circuit de fluide chaud, l'air de traitement passe d'une température de 178°C à une température de 103°C, et la température du fluide caloporteur du circuit de fluide chaud passe de 95°C à 170°C.

On peut prévoir également un deuxième échangeur du circuit de fluide chaud 2_FC, disposé le long de la ligne de sortie des fumées de combustion, en l'espèce entre le quatrième échangeur de l'air comburant et le deuxième échangeur du circuit de fluide tiède.

Grâce à ce deuxième échangeur, la température des fumées de combustion passe en l'espèce de 244°C à 110°C, et l'eau surchauffée en sortie de la pompe à chaleur passe de 95°C à 170°C.

On prévoit donc un T sur une canalisation de sortie du circuit de fluide chaud de la pompe à chaleur et un T sur une canalisation d'entrée du circuit de fluide chaud de la pompe à chaleur, permettant de distribuer l'eau surchauffée vers le premier et le deuxième échangeur du circuit de fluide chaud, et de collecter l'eau surchauffée depuis le premier et le deuxième échangeur du circuit de fluide chaud, respectivement.

Grâce au premier échangeur du circuit de fluide chaud et au deuxième échangeur du circuit de fluide chaud, l'eau surchauffée de la pompe à chaleur passe d'une température de 95°C en sortie de celle-ci à 170°C en entrée de celle-ci, après échanges thermiques avec l'air de traitement et les fumées de combustion.

A titre alternatif, ou en combinaison, on peut également prévoir un ensemble d'au moins un échangeur entre le circuit de fluide chaud et le circuit de l'air comburant.

La PACA comprend également un circuit d'entrée et de sortie d'eau froide, c'est-à-dire de circuit de fluide froid.

### - Circuit de fluide froid -

De manière similaire au circuit de fluide chaud, on peut prévoir de disposer un premier échangeur du circuit de fluide froid 1_FF sur la ligne de sortie de l'air de traitement, plus particulièrement en aval de l'échangeur d'un réseau utile, ou réseau de chaleur utile RCU, décrit ci-après.

Grâce au premier échangeur du circuit de fluide froid, l'air de traitement passe d'une température de 69°C à une température de 32°C, et le fluide caloporteur du circuit d'eau froide passe d'une température de 28°C à une température de 35°C, équivalent à une puissance échangée de 168 kW.

On peut également prévoir un deuxième échangeur du circuit de fluide froid 2_FF, de type condenseur ou non, disposé le long de la ligne de sortie des fumées de combustion, qui permet de chauffer l'eau froide en sortie de la pompe à chaleur. En l'espèce le deuxième échangeur d'eau froide est en dernier sur la ligne de sortie des fumées de combustion, avant relargage de celles-ci dans l'atmosphère.

Grâce à ce deuxième échangeur du circuit de fluide froid, la température des fumées de combustion passe en l'espèce de 84°C à 42°C, et l'eau froide passe d'une température de 28°C à une température de 35°C, équivalent à une puissance échangée de 260 kW.

On prévoit donc un T sur une canalisation de sortie de la pompe à chaleur et un T sur une canalisation d'entrée de la pompe à chaleur, du circuit de fluide froid, permettant de distribuer l'eau froide vers le premier et le deuxième échangeur du circuit de fluide froid, et de collecter l'eau froide depuis le premier et le deuxième échangeur du circuit de fluide froid.

### - Circuit de fluide tiède -

De manière similaire aux circuits de fluides chaud et froid, la PACA comprend également un circuit d'entrée et sortie d'eau de température moyenne, ou tiède, dont la température d'entrée est de 60°C et la température de sortie est de 80°C, qui sont en l'espèce des valeurs de consigne prédéterminées d'un réseau de chaleur urbain. Les valeurs données dans la présente description optimisent le procédé mis en oeuvre dans la simulation, et sont calculées à partir de ces 2 valeurs de consigne.

Cette chaleur peut être utilisée pour tout usage, industriel, réseau de chaleur urbain ou autre, ce pourquoi le circuit de fluide tiède est également appelé « réseau utile ».

A cet effet, on peut prévoir de disposer un premier échangeur du circuit de fluide tiède 1_FT sur la ligne de sortie de l'air de traitement, plus particulièrement en aval du premier échangeur du circuit de fluide chaud 1_FC, et en amont du premier échangeur du circuit de fluide froid 1_FF.

Grâce au premier échangeur du circuit de fluide tiède, l'air de traitement passe d'une température de 103°C à une température de 69°C, et le fluide caloporteur du circuit d'eau tiède passe de 60°C à 80°C, équivalent à une puissance échangée de 160 KW.

De préférence, le premier échangeur du circuit de fluide tiède est disposé en amont du premier échangeur du circuit de fluide froid, et en aval du premier échangeur du circuit de fluide chaud.

On peut prévoir également un deuxième échangeur du circuit de fluide tiède 2_FT, disposé le long de la ligne de sortie des fumées de combustion.

De préférence, le deuxième échangeur du circuit d'eau tiède est disposé en amont du deuxième échangeur du circuit de fluide froid, et en aval du deuxième échangeur du circuit de fluide chaud.

Le deuxième échangeur du circuit d'eau tiède permet d'abaisser la température des fumées de 110°C à 84°C, et de chauffer le fluide caloporteur du circuit d'eau tiède de 60°C à 80°C, équivalent à une puissance échangée de 51 KW.

Pour la PACA, on a donc en l'espèce trois échangeurs par ligne : un échangeur pour le circuit de fluide chaud, un échangeur pour le circuit d'eau tiède et un échangeur pour le circuit de fluide froid sur la ligne des fumées de combustion, et de même sur la ligne de l'air de traitement.

A titre alternatif, ou en combinaison, on peut également prévoir un ensemble d'au moins un échangeur sur le circuit de l'air comburant pour au moins l'un des circuits parmi :
- Le circuit de fluide chaud,
- le circuit d'eau tiède, et
- le circuit de fluide froid.

En valeurs cumulées sur l'ensemble des échangeurs de la PACA, on a une puissance échangée égale à 1057 kW.

### * Circuit pour l'air comburant *

L'air comburant est en l'espèce de l'air extérieur qui est traité par un ensemble d'au moins un échangeur et amené en entrée de l'enceinte.

On peut donc prévoir un ensemble d'échangeurs sur le circuit de l'air comburant qui permettent, comme précédemment, d'avantageusement mettre en œuvre une double récupération de chaleur : avec la ligne de sortie de l'air de traitement et avec la ligne de sortie des fumées de combustion.

### - Sur la ligne de l'air de traitement -

On peut prévoir un premier échangeur pour l'air comburant, disposé sur la ligne de l'air de traitement, en l'espèce en amont du deuxième compresseur.

Le premier échangeur pour l'air comburant permet d'augmenter la température de l'air comburant en amont de l'enceinte.

On peut prévoir un deuxième échangeur pour l'air comburant 2_AC, disposé sur la ligne de l'air de traitement, en l'espèce en bout de ligne de l'air de traitement, en aval du premier échangeur d'eau froide, et en sortie duquel l'air de traitement est relargué dans l'atmosphère.

Le deuxième échangeur pour l'air comburant permet d'abaisser la température de l'air de traitement, en l'espèce de 32°C à 25°C ; et permet d'augmenter la température de l'air comburant, qui en l'espèce est de l'air ambiant, de 10°C à 30°C, équivalent à une puissance échangée de 33 kW.

On peut prévoir un troisième échangeur pour l'air comburant 3_AC, disposé sur la ligne de l'air de traitement, en l'espèce en amont du premier échangeur d'eau surchauffée 1_FC.

Le troisième échangeur pour l'air comburant permet d'augmenter la température de l'air comburant, en l'espèce de 30°C à 195°C, et d'abaisser la température de l'air de traitement, en l'espèce de 235 °C à une température de 178°C, équivalent à une puissance échangée de 275 kW.

### - Sur la ligne des fumées de combustion -

On peut prévoir un quatrième échangeur pour l'air comburant 4_AC, disposé sur la ligne des fumées de combustion, en l'espèce entre le dispositif thermoélectrique 400 décrit ultérieurement et le deuxième échangeur pour le circuit de fluide chaud 2_FC.

Le quatrième échangeur pour l'air comburant permet d'augmenter la température du fluide caloporteur et de diminuer la température des fumées de combustion.

On peut prévoir un cinquième échangeur pour l'air comburant 5_AC, disposé sur la ligne des fumées de combustion, en l'espèce en amont du dispositif thermoélectrique décrit ultérieurement.

Le cinquième échangeur pour l'air comburant permet d'augmenter la température du fluide caloporteur et de diminuer la température des fumées de combustion.

De manière similaire, ou alternative, on peut prévoir un sixième échangeur pour l'air comburant 6_AC, disposé sur la ligne des fumées de combustion, en l'espèce en entrée de l'enceinte.

Le sixième échangeur pour l'air comburant permet d'augmenter la température de l'air comburant en entrée de l'enceinte et de diminuer la température des fumées de combustion en sortie de celle-ci.

### * Cycle combiné *

Selon un principe de cycle combiné, on peut prévoir en outre de mettre en œuvre un ensemble d'au moins un dispositif thermoélectrique 400 qui permet de produire de l'électricité à partir de chaleur, en plus de l'électricité générée par la turbine précédemment décrite.

Par exemple, le dispositif thermoélectrique est au moins l'un parmi :
- une machine à cycle organique de Rankine, aussi appelée ORC, qui utilise de l'eau surchauffée, de la vapeur (en l'espèce saturée) ou un composé organique comme fluide caloporteur ;
- un expanseur, notamment un expanseur à vis ;
- une turbine vapeur ;
- Un procédé thermochimique
- etc.

C'est-à-dire tout équipement permettant de produire de l'électricité à partir d'une source de chaleur, de préférence de plus de 100°C et en particulier de plus de 150°C.

Ce dispositif de génération d'électricité peut être mis en œuvre sur l'un au moins parmi :
- la ligne des fumées de combustion,
- la ligne de l'air de traitement,
- le circuit de fluide chaud de la pompe à chaleur.

On peut prévoir de mettre en œuvre une pluralité de tels dispositifs thermoélectriques, par exemple un sur la ligne des fumées de combustion, un autre sur la ligne de l'air de traitement, et un dernier sur le circuit de fluide chaud de la pompe à chaleur.

Par exemple, le fluide caloporteur interne au dispositif thermoélectrique est à une température de 200°C.

Le dispositif thermoélectrique est également relié au circuit de fluide tiède, c'est à dire au réseau utile.

Le dispositif thermoélectrique transforme une partie de la chaleur du fluide caloporteur (200°C) en électricité. En sortie du dispositif thermoélectrique, le fluide caloporteur du réseau utile est à une température comprise par exemple entre 65°C et 95°C, et en l'espèce de 90°C, ce qui équivaut à une puissance de 862 kW d'énergie calorifique, et une puissance de 86 kWe, pour kW électriques.

### * Résultats *

Avec les valeurs simulées ici, on obtient grâce à l'invention une puissance électrique produite nette égale à 413 kWe, correspondant à un rendement électrique de 16%, et puissance thermique produite nette égale à 2103 kW, correspondant à un rendement thermique de 82.6%, soit un rendement global de 98%.

L'invention n'est pas limitée aux modes de réalisation précédemment décrits. En effet, un échangeur est configuré pour échanger de la chaleur entre une source chaude et une source froide.

Ainsi, tout échangeur ayant été décrit comme disposé sur l'une des trois sources chaudes (ligne de l'air de traitement, ligne des fumées de combustion et circuit de fluide chaud de la pompe à chaleur) peut alternativement être disposé sur l'une des deux autres sources chaudes.

La présente invention n'est pas limitée aux modes de réalisation précédemment décrits. Notamment, la position relative des échangeurs peut varier, ainsi que leur nombre.

### Nomenclature

10 premier compresseur
20 deuxième compresseur
100 Enceinte
200 Turbine
300 Pompe à chaleur à absorption (PACA)
400 Dispositif thermoélectrique
_AC circuit de l'air comburant
_FC circuit de fluide chaud
_FF circuit de fluide froid
_FT circuit de fluide tiède
AT circuit de l'air de traitement
FC circuit des fumées de combustion
EXT air extérieur / atmosphère
RCU réseau de chaleur utile
1_AT premier échangeur de chaleur pour l'air de traitement
1_AC premier échangeur pour l'air comburant
2_AC deuxième échangeur pour l'air comburant
3_AC troisième échangeur pour l'air comburant
4_AC quatrième échangeur pour l'air comburant
5_AC cinquième échangeur pour l'air comburant
6_AC sixième échangeur pour l'air comburant
1_FC premier échangeur du circuit de fluide chaud
2_FC deuxième échangeur du circuit de fluide chaud
1_FT premier échangeur du circuit de fluide tiède
2_FT deuxième échangeur du circuit de fluide tiède
1_FF premier échangeur du circuit de fluide froid
2_FF deuxième échangeur du circuit de fluide froid

## Revendications

1. Système de cogénération en cycle ouvert d'énergie thermique et électrique, comprenant :
- un ensemble d'au moins un échangeur thermique, configuré pour être relié à des fumées de combustion provenant d'un foyer ; ledit ensemble d'au moins un échangeur thermique comprenant une entrée et une sortie d'air de traitement (AT),
- une turbine (200), configurée pour produire de l'énergie électrique, reliée à la sortie d'air de traitement dudit ensemble d'au moins un échangeur thermique,
- une ligne de sortie de l'air de traitement, reliant la sortie de la turbine à l'extérieur,
- une ligne de sortie fumées de combustion, pour évacuer les fumées de combustion vers l'extérieur,
- un ensemble d'au moins un compresseur (10, 20), configuré pour comprimer l'air de traitement en entrée de l'ensemble d'au moins un échangeur thermique,
**caractérisé en ce qu'**il comprend en outre :
- une pompe à chaleur à absorption (300), comprenant :
* un circuit de fluide chaud (_FC),
* un circuit de fluide froid (_FF),
* un circuit de fluide tiède (_FT), ou réseau utile, et
* un ensemble d'au moins un échangeur pour échanger de la chaleur entre l'un au moins des circuits de la pompe à chaleur et l'une au moins parmi la ligne de sortie de l'air de traitement et la ligne de sortie fumées de combustion.

2. Système selon la revendication 1, comprenant en outre un ensemble d'au moins un dispositif thermoélectrique, permettant de produire de l'électricité à partir d'une source de chaleur de plus de 150°C et disposé sur l'une au moins parmi la ligne de sortie de l'air de traitement et la ligne de sortie fumées de combustion.

3. Système selon la revendication 2, dans lequel le dispositif thermoélectrique est au moins l'un parmi :
- une machine à cycle organique de Rankine;
- un expanseur, notamment un expanseur à vis ;
- une turbine vapeur.

4. Système selon l'une quelconque des revendications précédentes, comprenant en outre un ensemble d'au moins un échangeur pour échanger de la chaleur entre au moins l'un parmi :
- le circuit de fluide chaud et la ligne de sortie de l'air de traitement,
- le circuit de fluide chaud et la ligne de sortie fumées de combustion,
- le circuit de fluide tiède et la ligne de sortie de l'air de traitement,
- le circuit de fluide tiède et la ligne de sortie fumées de combustion,
- le circuit de fluide froid et la ligne de sortie de l'air de traitement, et
- le circuit de fluide froid et la ligne de sortie fumées de combustion.

5. Système selon l'une quelconque des revendications précédentes, comprenant en outre une enceinte, configurée pour produire de l'énergie thermique et des fumées de combustion, et comprenant ledit foyer et une sortie de fumées de combustion ; ledit ensemble d'au moins un échangeur thermique pouvant être interne ou externe à l'enceinte.

6. Système selon la revendication 5, dans lequel l'enceinte est l'un parmi :
- une chaudière,
- un four industriel,
- un incinérateur.

7. Système selon l'une quelconque des revendications précédentes, dans lequel le foyer comprend de l'air comburant, ledit air comburant étant de l'air extérieur qui est traité dans un circuit pour l'air comburant, ledit circuit pour l'air comburant comprenant au moins l'un parmi
- un ensemble d'au moins un échangeur pour échanger de la chaleur avec la ligne de sortie de l'air de traitement, et
- un ensemble d'au moins un échangeur pour échanger de la chaleur avec la ligne de sortie fumées de combustion.

8. Système selon l'une quelconque des revendications 5 à 7, comprenant un échangeur de chaleur, disposé en amont de l'enceinte, et configuré pour préchauffer l'air de traitement en entrée de l'enceinte ou en entrée de l'ensemble d'au moins un échangeur thermique relié aux fumées de combustion provenant du foyer, et avec la chaleur de l'air de traitement en sortie de la turbine.

9. Système selon l'une quelconque des revendications précédentes, dans lequel le réseau utile présente, en entrée de la pompe à chaleur à absorption, une température comprise entre 35°C et 65°C, et en sortie de la pompe à chaleur à absorption, une température comprise entre 40°C et 90°C.

10. Système selon l'une quelconque des revendications précédentes, dans lequel le réseau utile est un réseau de chaleur urbain, ou un réseau de procédé industriel valorisant de la chaleur.

## Patentansprüche

1. Offenes Kraft-Wärme-Kopplungssystem für thermische und elektrische Energie, bestehend aus:
- einen Satz aus mindestens einem Wärmetauscher, der für den Anschluss an die Verbrennungsabgase eines Kamins konfiguriert ist; wobei die Anordnung aus mindestens einem Wärmetauscher besteht, der einen Einlass und einen Auslass (AT) für Behandlungsluft umfasst,
- eine Turbine (200), die zur Erzeugung elektrischer Energie konfiguriert ist und mit dem Behandlungsluftauslass der Anordnung aus mindestens einem Wärmetauscher verbunden ist,
- eine Behandlungsluft-Auslassleitung, die den Turbinenauslass mit der Außenwelt verbindet,
- eine Abgasleitung zur Ableitung der Verbrennungsgase nach außen,
- eine Gruppe aus mindestens einem Kompressor (10, 20), die dazu konfiguriert ist, die Behandlungsluft am Einlass der Gruppe aus mindestens einem Wärmetauscher zu komprimieren,
**dadurch gekennzeichnet, dass** es weiterhin umfasst:
- eine Absorptionswärmepumpe (300), die Folgendes umfasst:
* einen Heißflüssigkeitskreislauf (_FC),
* einen Kaltflüssigkeitskreislauf (_FF),
* einen Warmflüssigkeitskreislauf (_FT) bzw. Nutznetz und
* eine Gruppe aus mindestens einem Wärmetauscher zum Wärmeaustausch zwischen mindestens einem der Wärmepumpenkreisläufe und mindestens einer der Behandlungsluftauslassleitungen und der Verbrennungsrauchauslassleitung.

2. System nach Anspruch 1, das außerdem einen Satz aus mindestens einer thermoelektrischen Vorrichtung umfasst, die es ermöglicht, Elektrizität aus einer Wärmequelle von mehr als 150°C zu erzeugen, und die an mindestens einer der Auslassleitungen für Behandlungsluft und Verbrennungsrauch angeordnet ist.

3. System nach Anspruch 2, bei dem die thermoelektrische Vorrichtung mindestens eines der folgenden ist:
- eine Maschine mit organischem Rankine-Kreisprozess;
- einen Expander, insbesondere einen Schraubenexpander;
- eine Dampfturbine.

4. System nach einem der vorhergehenden Ansprüche, das ferner einen Satz von mindestens einem Wärmetauscher zum Austauschen von Wärme zwischen mindestens einem der folgenden Elemente umfasst:
- dem Heißflüssigkeitskreislauf und der Behandlungsluft-Auslassleitung,
- dem Heißflüssigkeitskreislauf und der Abgasleitung,
- dem Warmflüssigkeitskreislauf und der Behandlungsluft-Auslassleitung,
- dem Warmflüssigkeitskreislauf und der Abgasleitung,
- dem Kaltflüssigkeitskreislauf und der Behandlungsluft-Auslassleitung und
- der Kaltflüssigkeitskreislauf und die Auslassleitung für Verbrennungsrauch.

5. System nach einem dervorhergehenden Ansprüche, ferner umfassend eine Umschließung, die zur Erzeugung von Wärmeenergie und Verbrennungsrauch konfiguriert ist und den Herd und einen Auslass für Verbrennungsrauch umfasst; Der Satz besteht aus mindestens einem Wärmetauscher, der sich innerhalb oder außerhalb des Gehäuses befinden kann.

6. System nach Anspruch 5, bei dem das Gehäuse eines der folgenden ist:
- einen Kessel,
- ein Industrieofen,
- eine Verbrennungsanlage.

7. Ein System nach einem der vorhergehenden Ansprüche, wobei der Ofen Verbrennungsluft umfasst, wobei es sich bei der Verbrennungsluft um Außenluft handelt, die in einem Verbrennungsluftkreislauf behandelt wird, wobei der Verbrennungsluftkreislauf mindestens eines der folgenden Elemente umfasst:
- eine Anordnung aus mindestens einem Wärmetauscher zum Wärmeaustausch mit der Abluftleitung der Behandlungsluft und
- eine Gruppe aus mindestens einem Wärmetauscher zum Wärmeaustausch mit der Abgasableitung.

8. System nach einem der Ansprüche 5 bis 7, das einen Wärmetauscher umfasst, der vor der Umhausung angeordnet ist und dazu konfiguriert ist, die Behandlungsluft am Einlass der Umhausung oder am Einlass der Anordnung aus mindestens einem Wärmetauscher vorzuwärmen, der mit den aus dem Herd kommenden Verbrennungsabgasen und mit der Wärme der Behandlungsluft am Auslass der Turbine verbunden ist.

9. System nach einem der vorhergehenden Ansprüche, bei dem das Nutznetz am Einlass der Absorptionswärmepumpe eine Temperatur zwischen 35 °C und 65 °C und am Auslass der Absorptionswärmepumpe eine Temperatur zwischen 40 °C und 90 °C aufweist.

10. System nach einem der vorhergehenden Ansprüche, wobei das Nutznetz ein städtisches Wärmenetz oder ein industrielles Prozessnetz ist, das Wärme nutzt.

## Claims

1. Open-cycle cogeneration system for thermal and electrical energy, comprising:
- a set of at least one heat exchanger, configured to be connected to combustion fumes from a hearth; said set of at least one heat exchanger comprising a process air inlet and outlet (AT),
- a turbine (200), configured to produce electrical energy, connected to the process air outlet of said set of at least one heat exchanger,
- a process air outlet line, connecting the turbine outlet to the outside,
- a combustion fumes outlet line, for evacuating the combustion fumes to the outside,
- a set of at least one compressor (10, 20), configured to compress the process air at the inlet of the set of at least one heat exchanger,
**characterized in that** it further comprises:
- an absorption heat pump (300), comprising:
* a hot fluid circuit (_FC),
* a cold fluid circuit (_FF),
* a warm fluid circuit (_FT), or useful network, and
* a set of at least one exchanger for exchanging heat between at least one of the heat pump circuits and at least one of the treatment air outlet line and the combustion fumes outlet line.

2. System according to claim 1, further comprising a set of at least one thermoelectric device, making it possible to produce electricity from a heat source of more than 150°C and arranged on at least one of the treatment air outlet line and the combustion fumes outlet line.

3. System according to claim 2, wherein the thermoelectric device is at least one of:
- an organic Rankine cycle machine;
- an expander, in particular a screw expander;
- a steam turbine.

4. The system according to any one of the preceding claims, further comprising a set of at least one exchanger for exchanging heat between at least one of:
- the hot fluid circuit and the process air outlet line,
- the hot fluid circuit and the combustion fumes outlet line,
- the warm fluid circuit and the process air outlet line,
- the warm fluid circuit and the combustion fumes outlet line,
- the cold fluid circuit and the process air outlet line, and
- the cold fluid circuit and the combustion fumes outlet line.

5. System according to any one of the preceding claims, further comprising an enclosure, configured to produce thermal energy and combustion fumes, and comprising said hearth and a combustion fume outlet; said set of at least one heat exchanger may be internal or external to the enclosure.

6. System according to claim 5, wherein the enclosure is one of:
- a boiler,
- an industrial furnace,
- an incinerator.

7. System according to any one of the preceding claims, wherein the hearth comprises combustion air, said combustion air being outside air which is treated in a circuit for combustion air, said circuit for combustion air comprising at least one of:
- a set of at least one exchanger for exchanging heat with the treatment air outlet line, and
- a set of at least one exchanger for exchanging heat with the combustion fumes outlet line.

8. System according to any one of claims 5 to 7, comprising a heat exchanger, arranged upstream of the enclosure, and configured to preheat the treatment air at the inlet of the enclosure or at the inlet of the assembly of at least one heat exchanger connected to the combustion fumes coming from the hearth, and with the heat of the treatment air at the outlet of the turbine.

9. System according to any one of the preceding claims, in which the useful network has, at the inlet of the absorption heat pump, a temperature between 35°C and 65°C, and at the outlet of the absorption heat pump, a temperature between 40°C and 90°C.

10. System according to any one of the preceding claims, in which the useful network is an urban heat network, or an industrial process network using heat.
